# EUROPEAN PATENT APPLICATION

(11) **EP 1 443 573 A1**
(43) Date of publication of application: **04.08.2004**
(21) Application number: 02777999.0
(22) Date of filing: 30.10.2002
(51) Int. Cl.: H01M 2/04, H01M 2/06, H01M 2/30, H01M 10/40

(54) **BATTERY**

(30) Priority: 31.10.2001 JP 2001335871
(71) Applicant: Japan Storage Battery Co., Ltd., Kyoto-shi, Kyoto 601-8520 (JP)
(72) Inventor: KOJIMA, Tetsuzo, JAPAN STORAGE BATTERY CO. LTD, Kyoto-shi, Kyoto 601-8520 (JP); MATSUBARA, Takehito, JAPAN STORAGE BATTERY CO. LTD, Kyoto-shi, Kyoto 601-8520 (JP)
(74) Representative: Müller-Boré & Partner Patentanwälte
(86) International application number: PCT/JP2002/011249
(87) International publication number: WO 2003/038927

(57) **Abstract**

The present invention is characterized in that a battery comprises: a cap plate which is welded to the opening of a battery case; an insulative holding overhang which is placed on said cap plate and protrudes to the upward direction of said cap plate; a terminal hole which is placed on said cap plate; a terminal material which is sealed to said terminal hole with an insulation sealing material containing an inorganic material; an insulator which is held by said insulative holding overhang and disposed on the upside of the said cap plate; and a terminal board which is supported by said insulator and electrically connected to said terminal material.

## Description

The present invention relates to a battery having a cap plate which is welded to the opening of a battery case.

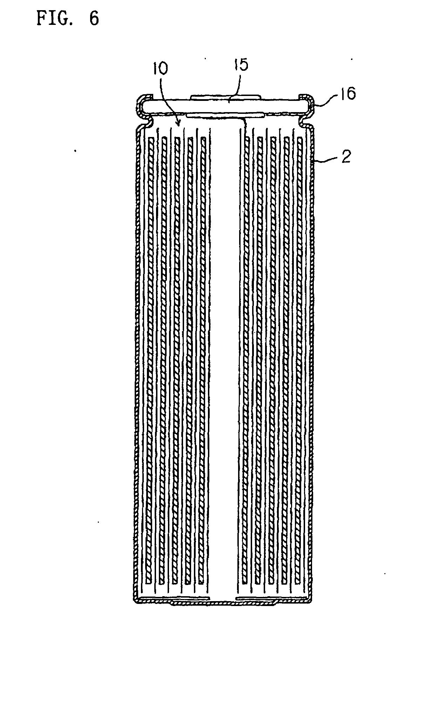

Among various types of batteries, some batteries of a cylindrical shape have a configuration such as shown in Fig. 6, where a cap 15 is mounted on the upper end opening of a cylindrical battery case 2 in which a battery element 10 is housed. In such batteries, the cap 15 is assembled with a stainless steel plate so as to form a button shape, and equipped with a vent valve inside. By being fitted into the upper end opening of the stainless steel battery case 2 with a sealing gasket 16 therebetween and its surrounding being crimped, the cap 15 serves as a terminal. In addition, the battery case 2 acts as an opposite polarity terminal to the cap 15.

Such a configuration is commonly used in non-aqueous electrolyte secondary batteries such as lithium-ion secondary batteries, where the cap 15 acts as a positive terminal and the battery case acts as a negative terminal.

In the batteries having the above-mentioned configuration, the inside of the battery case 2 is sealed by crimping with a sealing gasket 16 therebetween. However, there arise problems in that the airtightness performance of battery cases is not fully guaranteed even at the time of battery manufacturing because of the insufficient accuracy of crimping, or it is difficult to ensure continuity of airtightness of battery cases for a long time because of the deterioration of the sealing gasket 16 with age.

Instead of crimping, therefore, the demand to seal the cap 15 perfectly to the upper end opening of the battery case 2 by welding has been realized for some time. However, since welding the cap 15 to the battery case 2 causes current conduction from the cap 15 to a cell case terminal, an opposite polarity terminal to the cell case is necessary to be installed to the cap 15 with insulation sealing in a different way from crimping the cap plate with a sealing gasket therebetween.

In some batteries having difficulties in crimping a cap plate to a cell case with a sealing gasket therebetween, in terms of shape, the following configuration is commonly used: a cap plate which is welded to a cell case is penetrated by a terminal material and the interface between the cap plate and the terminal material is insulated with a resinous sealing gasket. Especially in square lithium-ion batteries, such a configuration has been commonly used.

However, in the use of such a resinous sealing gasket, there arise problems in that the airtightness performance of battery cases is not fully guaranteed even at the time of battery manufacturing because of the insufficient accuracy of crimping, or it is difficult to ensure continuity of airtightness of battery cases for a long time because of the deterioration of the sealing gasket with age.

On the other hand, some batteries are manufactured with a different configuration, where a cap plate which is welded to a cell case is penetrated by a terminal material, the interface between the cap plate and the terminal material is insulated with an inorganic material such as a glass hermetic seal, and the terminal material penetrating the cap plate is directly used as a terminal of the battery. Especially in large-size lithium-ion batteries, such a configuration has been commonly used. In this configuration, since a resinous sealing gasket is not used, it is possible to ensure continuity of airtightness of battery cases for a long time.

Usually, however, a battery terminal is required to hold an area sufficient enough to facilitate connection with an electronic device or with a lead wire taking out current. In batteries having such a configuration, therefore, a terminal material penetrating a cap plate becomes large in size by itself, so that it can be used only in large-size batteries but not in small-size batteries because of its storage space. Specifically, this problem is significant for small-size batteries having a battery volume less than 100 cm³. In addition, there arises a problem of an increase in battery weight with an increase in size of the terminal material made of metal.

In order to overcome the problems mentioned above, the battery having the following configuration has been proposed; a cap plate is welded to the opening of a battery case, a terminal material penetrates the cap plate which is welded to a cell case, the interface between the cap plate and the terminal material is insulated with an inorganic material such as a glass hermetic seal, and a terminal board which is electrically connected to the terminal material is used as a terminal of the battery. In case of such a configuration, even if the terminal material penetrating the cap plate is small in size, a battery terminal with wide surface area is available. As a result, the terminal material can be reduced in the storage space so as to be applicable to small-size batteries and, furthermore, the smaller-size terminal material can lead to reduction in battery weight.

In such a configuration, where the polarities of the cap plate and the terminal board are opposite each other, it is necessary that an insulation material be placed between the cap plate and the terminal board for short circuit protection. Usually in such a case, a resinous insulator is used as an insulation material, and the terminal board is supported and fixed in place by the insulator.

However, since an insulator has to provide electrical insulation performance, it cannot use metal as a material and accordingly cannot be fixed to a cap plate by welding. Thus, until now, an insulator has been fixed to a cap plate with an adhesive agent or adhesive tape. Alternatively, an adhesive tape itself has been used as an insulator. In such an approach of using an adhesive agent or adhesive tape, however, there arise problems in that long-term reliability of fixation of an insulator or an insulation material to a cap plate is questionable and "peeling" occurs easily.

When such "peeling" occurs, the terminal board supported by the insulator, or the position of parts such as protective devices around the insulator fails to be fixed tightly; therefore, there arise problems in that an electrical joint of the terminal board or parts may be disconnected, or short circuit may occur between a portion electrically connected to a positive electrode and a portion electrically connected to a negative electrode.

The object of the present invention is to provide a battery: in which a cap plate is welded to the opening of a battery case, and a terminal material is sealed to a terminal hole of the cap plate with an insulation sealing material containing an inorganic material; and in which long-term reliability of fixation of an insulator to the cap plate is excellent, an electrical joint of a terminal board or parts will not be disconnected, and short circuit will not occur between a portion electrically connected to a positive electrode and a portion electrically connected to a negative electrode.

The present invention is characterized in that a battery comprises: a cap plate which is welded to the opening of a battery case; an insulative holding overhang which is placed on said cap plate and protrudes to the upward direction of said cap plate; a terminal hole which is placed on said cap plate; a terminal material which is sealed to said terminal hole with an insulation sealing material containing an inorganic material; an insulator which is held by said insulative holding overhang and disposed on the upside of said cap plate; and a terminal board which is supported by said insulator and electrically connected to said terminal material.

In this description, the direction from the surface which is formed with a cap plate toward the outside of a cell case is referred to as an upward direction and the direction toward the inside of the cell case as a downward direction.

The insulative holding overhang mentioned in this description represents a portion which is fixed directly or indirectly to the cap plate, protrudes from the cap plate, and is used to hold the insulator directly or indirectly.

In addition, the expression in this description "which is supported by the insulator" is not necessarily limited to a case where a component to be supported comes into direct contact with the insulator, but includes a case where it is supported by another part which is present therebetween.

The present invention is different from the prior art in which an insulator is fixed only with an adhesive agent or adhesive tape, in that an insulator is held by an insulative holding overhang which is placed on a cap plate and protrudes to the upward direction of the cap plate. In the approach of using such an insulative holding overhang to fix an insulator, the insulator can be held without depending on an adhesive agent or adhesive tape, which is inferior in fixing strength in terms of long-term reliability, so that the fixing strength hardly becomes weaker even after a considerable period of time has elapsed.

Therefore, the battery of the present invention becomes excellent in long-term reliability of fixation of an insulator to a cap plate, and consequently provides following advantages: it is less likely that an electrical joint of a terminal board or parts will be disconnected, or short circuit will occur between a portion electrically connected to a positive electrode and a portion electrically connected to a negative electrode.

Furthermore, in the battery of the present invention, since a cap plate is welded to the opening of a battery case and a terminal material is sealed to a terminal hole with an insulation sealing material containing an inorganic material, the airtightness of the battery case is more fully guaranteed even at the time of battery manufacturing and can be more certainly ensured over a long time, than batteries in which a battery case is sealed with a resinous sealing gasket.
FIG. 1 is an exploded perspective view showing an embodiment of the invention and showing the configuration of a cap of a cylindrical lithium-ion secondary battery.
FIG. 2 is a longitudinal sectional view showing an embodiment of the invention and showing the configuration of the cylindrical lithium-ion secondary battery.
FIG. 3 is an exploded perspective view showing an embodiment of the invention and showing the configuration of a battery of the cylindrical lithium-ion secondary battery.
FIG. 4 is an exploded perspective view showing an embodiment of the invention and showing the configuration of a cap of a cylindrical lithium-ion secondary battery in which a protection circuit is housed.
FIG. 5 is a schematic circuit diagram showing an embodiment of the invention and showing the protection circuit used in the cylindrical lithium-ion secondary battery.
FIG. 6 is a longitudinal sectional view showing the prior art example and showing the configuration of a cylindrical lithium-ion secondary battery.
FIG. 7 is a top view showing an embodiment of the invention and showing a cap plate of a battery.
FIG. 8 is a top view showing an embodiment of the invention and showing an insulator and a fixing of a battery.
FIG. 9 is a front elevational view showing an embodiment of the invention and showing the fixing of the battery.
FIG. 10 is a longitudinal sectional view showing an embodiment of the invention and showing the surrounding of a fixing of a battery.
FIG. 11 is a longitudinal sectional view showing an embodiment of the invention and showing the surrounding of a fixing of a battery.

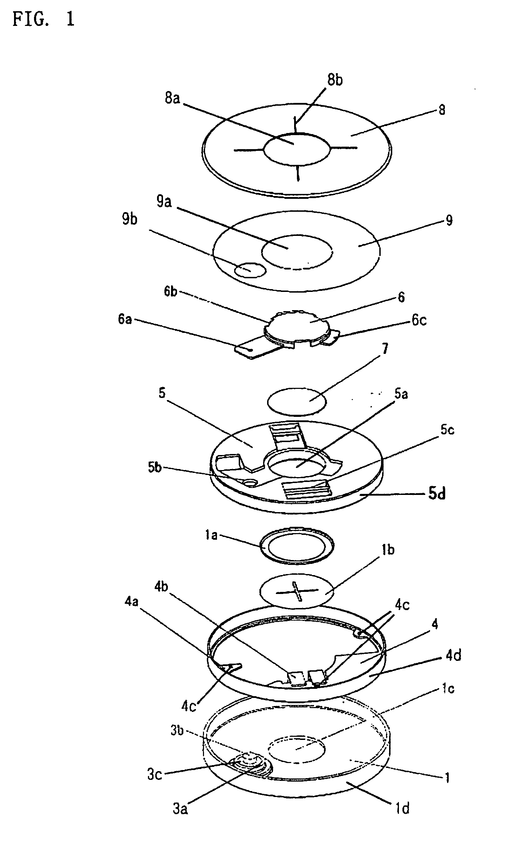

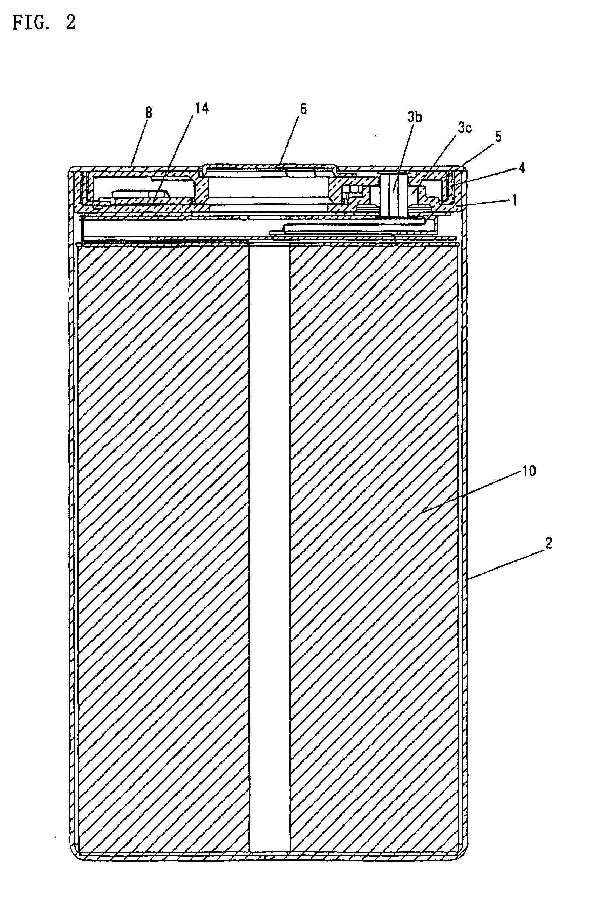

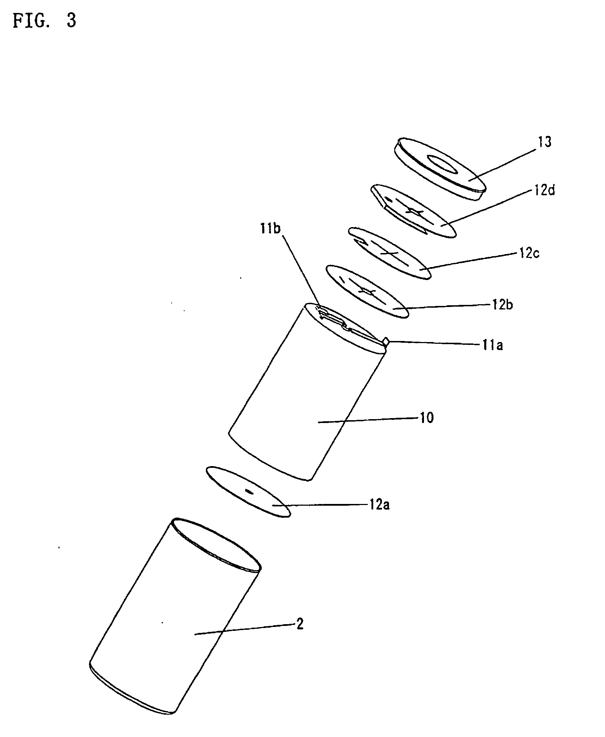

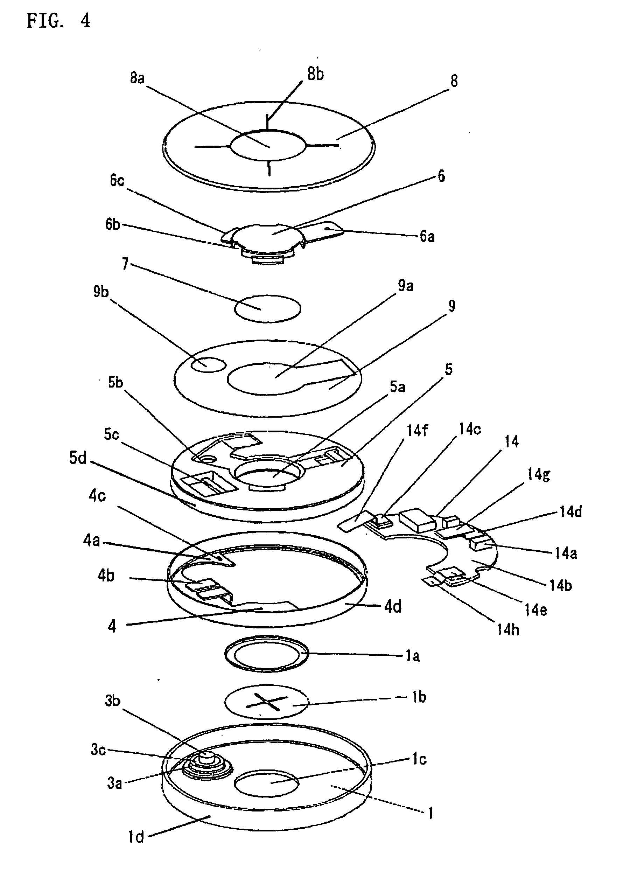

As embodiments of the invention, configurations of a cylindrical lithium-ion secondary battery are shown in FIGS. 1 to 4. FIG. 1 is an exploded perspective view showing a cap of the lithium-ion secondary battery; FIG. 2 is a longitudinal sectional view showing the configuration of the cylindrical lithium-ion secondary battery; FIG. 3 is an exploded perspective view showing the configuration of the lithium-ion secondary battery; and FIG. 4 is an exploded perspective view showing a cap of a lithium-ion secondary battery. In addition, the configuration of the prior art example is shown in FIG. 6, and the components in FIGS. 1 to 4 which have the same function as those of the prior art example are denoted by the same reference numerals as in FIG. 6.

The cylindrical lithium-ion secondary battery of the present invention is configured, as shown in FIGS. 1 to 3, in such a manner that a battery element 10 is housed in a cylindrical battery case 2 so that some insulating sheets 12a to 12d are put directly on the top and the bottom of the battery element 10, a cap plate 1 and a cap assembly 13 comprising other components are fitted into the upper end opening of the battery case 2, and the battery case 2 is sealed by welding.

The battery case 2 is usually made of stainless steel, and by being connected to a connecting tab 11a, which is derived from a negative electrode in the battery element 10 housed in the battery case 2, the battery case itself serves as a negative terminal. In addition, with being protected from short circuit with insulating sheets 12b to 12d, a connecting tab 11b which is derived from a positive electrode of the battery element 10 is connected to a terminal material 3b, which is sealed after penetrating the cap plate, and then connected to a terminal board tab 6a through the terminal material 3b. Thus, a terminal board 6 serves as a positive terminal.

In the above-mentioned cap plate 1, as shown in FIG. 1, a vent opening 1c is formed in the center of the plate, and a cap plate protrusion 1d locating at the rim of the disc-shaped cap plate 1 is folded upward along the circumference so as to be easily fitted into and welded to the upper end opening of the battery case 2. At some distance from the vent opening 1c of the cap plate 1, a terminal hole 3a is formed. A terminal material 3b is introduced through this terminal hole 3a with an insulation sealing material 3c therebetween and then sealed up.

In the terminal hole 3a, the opening rim is folded upward along the circumference so that the insulation sealing material 3c can be formed with sufficient thickness. The terminal material 3b comprises a stainless steel pin, whose top and bottom ends protrude from the insulation sealing material 3c upward and downward, respectively, and the bottom end is connected to the positive electrode of the battery element 10, which is housed in the battery case 2, through the connecting tab 11b.

On the upside of the vent opening 1c of the cap plate 1, a disc-shaped vent valve 1b, which is so designed to open when a pressure inside the battery case 2 rises abnormally, and a holder 1a are mounted, and by being welded over the holder 1a the circumference of the vent valve 1b is deposited on the cap plate 1, so that the vent opening 1c is sealed up.

The vent valve 1b is a thin metal sheet comprising a nickel-plated layer on which a cross-shaped groove is cut, and the thickness of the metal sheet is formed into approximately 30 µm and the depth of the groove is made with a high accuracy of approximately 10 µm; by such a configuration, the groove having a remaining thickness of 20 µm is formed so as to certainly break and open when the pressure inside the battery case 2 reaches approximately 1 MPa. However, since it is difficult to seal the vent opening 1c completely by welding such a thin vent valve 1b directly to the cap plate 1, a ring-shaped holder 1a made of stainless steel is laid on the vent valve 1b so as to be welded together as a unit.

On the bottom surface of the cap plate 1, a fixing 4 made of stainless or nickel-plated steel sheet is fixed by welding. The fixing 4 comprises a raised portion 4d which projects upward in a ring shape along the rim, a claw 4a, and an insulation holding overhang 4b. The fixing 4 is mounted in contact with the bottom face of the cap plate 1 and fixed to the cap plate 1 at three weld spots 4c by welding.

An insulator 5 is mounted on the fixing 4. The insulator 5 is equipped with an insulator vent 5a in the center; and in the off-center positions, a round through-hole 5b which is passed through by the terminal material 3b, and a slit through-hole 5c which is passed through by the insulation holding overhang 4b which is placed on the fitting 4. A portion of the insulation holding overhang 4b, which overhangs upward from the through-hole 5c, is folded along the surface of the insulator 5 so as to secure the insulator 5 firmly to the cap plate 1. In addition, between the insulator vent 5a in the center of the insulator 5 and a bent-down portion 5d which is formed in a ring shape along the rim, a space is provided so as to be able to house a protection circuit 14 to be described later. As a material for the insulator 5, PBT or PPS resin and so on is used in terms of formability and reliability.

A terminal board 6 is supported by the insulator 5 in the following manner. On the insulator 5, a terminal board 6 is disposed so as to cover the insulator vent 5a and the terminal through-hole 5b. The terminal board 6 is a disk shape and made of nickel-plated steel sheet, and an area except the rim protrudes upward, on which a vent 6b is placed, and forms a shape like a shallow container being turned upside down. In this terminal board 6, a tab 6a projects laterally from one edge of the disk, and a locking part 6c also projects laterally from a position 120-degree far from the tab 6a. The end of the tab 6a is welded to the upper end of the terminal material 3b which comes out of the terminal through-hole 5b of the insulator 5. Furthermore, as described later, the tab 6a is welded to a connecting strip which comes out of a protection circuit 14, in the event the protection circuit is mounted. The locking part 6c is disposed so as to come into contact with the upper face of the insulator 5, but not fixed to the insulator 5.

To the downside of the disk-like portion of the terminal board 6, an insulation seal 7 is applied for insulation protection.

To the upside of the insulator 5, an upper insulator 8 is attached and fixed with a double-sided adhesive tape 9. The upper insulator 8 is formed into a round shape with a diameter slightly larger than that of the cap plate 1, and equipped with an upper insulator opening 8a of a round shape at the center so that the disk-like portion of the terminal board 6 can be exposed. In addition, cuts 8b are formed so as to radiate out in four directions from the upper insulator opening 8a of a round shape. In the event a pressure inside the battery case 2 increases abnormally and the groove of the vent valve 1b is broken and ruptured, since the terminal board 6 is pushed upward by a powerful force from the lower side, the locking part 6c is disengaged from the upper insulator opening 8a, a portion of the terminal board 6 away from the base of the tab 6a is bent and moved upward, and, as a result, gas can be released at once. Therefore, forming the cuts 8b on the upper insulator 8, as described above, makes it easier for the locking part 6c to disengage from the upper insulator opening 8a when the vent valve 1b is operating, and consequently provides improvement of battery safety.

Furthermore, the double-sided adhesive tape 9 which is slightly smaller than the upper insulator 8 is equipped with a hole 9a in the center, from which the disk-like portion of the terminal board 6 is exposed, and a hole 9b at the outer side, which is necessary when the terminal material 3b and the tab 6a of the terminal board 6 are welded.

Next, the battery of the present invention which mounts a protection circuit for protecting abnormal charge or excess discharge and securing battery safety will be described with reference to the drawings.

A protection circuit 14, as shown in FIG. 4, is formed in such a manner that a doughnut-shaped disk with a hole in the center is cut into a fan-like form so as to be inserted under the insulator 5. With a printed circuit board 14b as a base, where an electric circuit is placed on a glass-fiber plate, elements 14a including a voltage or temperature detecting element, FET, a current interrupting element such as a fuse, and peripheral elements are mounted in so-called the form of chip. In addition, terminals 14c, 14d, and 14e to be connected to the input and output sides are also mounted.

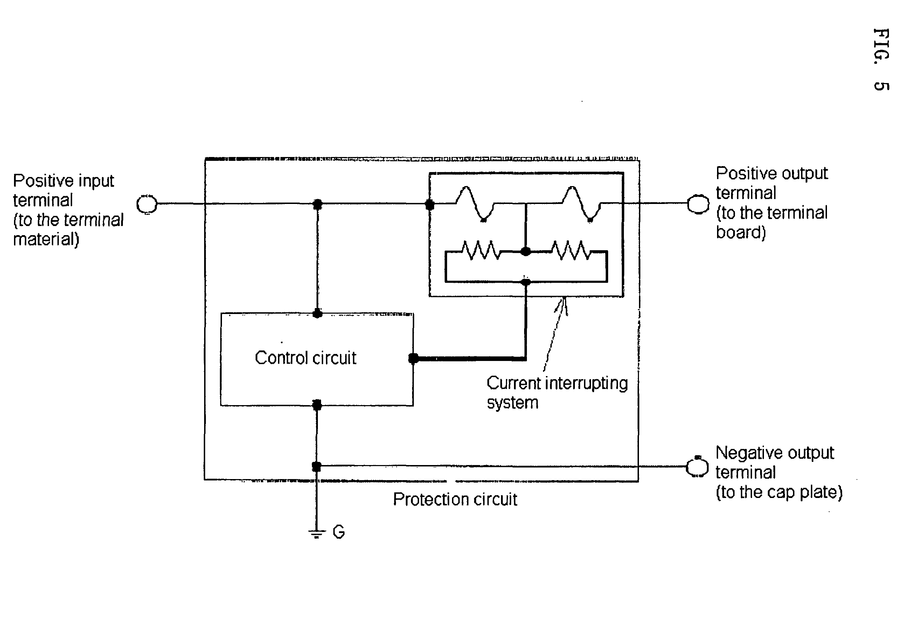

An example of the circuit diagrams of the protection circuit 14 is shown in FIG. 5. In this circuit diagram, the protection circuit 14 consists of a control circuit where a voltage detection IC, a temperature detection thermistor, and electronic parts such as switching elements like FET are mainly mounted, and a current interrupting system where a current interrupting fuse is built in; and is equipped with a positive input terminal 14c, a positive output terminal 14d, and a negative output terminal 14e.

In the embodiment shown in FIG. 4, the positive input terminal 14c of the protection circuit 14 is connected to the terminal material 3b of the battery through a connecting strip 14f, the positive output terminal 14d is connected to the tab 6a of the terminal board 6 through a connecting strip 14g, and the negative output terminal 14e is connected to the bottom of the cap plate 1 through a tab 14h.

As shown in the above-mentioned embodiment, the battery of the present invention comprises a cap plate 1 which is welded to the opening of a battery case 2; an insulative holding overhang 4b which is placed on the cap plate 1 and protrudes to the upward direction of the cap plate 1; a terminal hole 3a which is placed on the cap plate 1; a terminal material 3b which is sealed to the terminal hole 3a with an insulation sealing material 3c containing an inorganic material; an insulator 5 which is held by the insulative holding overhang 4b and disposed on the upside of the cap plate 1; and a terminal board 6 which is supported by the insulator 5 and electrically connected to said terminal material 3b.

The expression in this description "which is placed on the cap plate" is not limited to the case where the insulative holding overhang 4b is placed directly on the cap plate 1, but includes the case, as shown in FIG. 1, where the insulative holding overhang 4b is placed on the cap plate 1 through the fixing 4 and so on.

The present invention is different in that an insulator 5 is held by an insulative holding overhang 4b which is placed on a cap plate 1 and protrudes to the upward direction of the cap plate 1, from the prior art in which an insulator 5 is fixed only with an adhesive agent or adhesive tape. In the approach of using such an insulative holding overhang 4b to fix an insulator 5, the insulator 5 can be held without depending on an adhesive agent or adhesive tape, which is inferior in fixing strength in terms of long-term reliability, so that the fixing strength hardly becomes weaker even after a considerable period of time has elapsed.

Therefore, the battery of the present invention becomes excellent in long-term reliability of fixation of an insulator 5 to a cap plate 1, and consequently provides following advantages: it is less likely that an electrical joint of a terminal board 6 or parts will be disconnected, or short circuit will occur between a portion electrically connected to a positive electrode and a portion electrically connected to a negative electrode.

Furthermore, as shown in the above-mentioned embodiment, in the battery of the present invention, since a cap plate 1 is welded to the opening of a battery case 2 and a terminal material 3b is sealed to a terminal hole 3a with an insulation sealing material 3c containing an inorganic material, the airtightness of the battery case 2 is more fully guaranteed even at the time of battery manufacturing and can be more certainly ensured over a long time, than batteries in which a battery case 2 is sealed with a resinous sealing gasket 16.

In the above-mentioned embodiment, the fixing 4 is introduced as a ring shape. However, the fixing 4 of the present invention is not necessarily limited to a ring shape, and any shape is possible if the component is fixed on the cap plate 1 by welding in order to secure the insulator 5.

In the present invention, however, it is preferable that the fixing 4 be a ring shape, as shown in the above-mentioned embodiment. Regarding the welding of the fixing 4 to the cap plate 1, it is advantageous to have more than one weld spot 4c, and more advantageous to keep a longer distance between each weld spot 4c, in that the fixing 4 is more firmly secured against an external force and, as a result, the weld spots become hard to come off. However, if the fixing 4 is simply made larger to leave a sufficient space between the weld spots 4c, this will lead to increase in the weight of the fixing 4, the weight of the battery, and also the volume of the fixing 4; therefore, there arises a problem in that a space for various parts to be housed in the vicinity of the cap plate 1 becomes narrow.

In case of a ring-shaped fixing 4, even if multiple weld spots 4c are disposed with a distance, it is possible to prevent increases in the weight and volume of the fixing 4 itself. In addition, since the parts such as protection elements can be housed inside a ring space of the ring-shaped fixing 4, a space in the vicinity of the cap plate 1 is allowed to be utilized effectively.

In the battery of the present invention, as shown in the above-mentioned embodiment, it is preferable that the cap plate 1 have a cap plate protrusion 1d which protrudes upward along its rim, the fixing 4 have a raised portion 4d which protrudes upward along its rim, and the raised portion 4d be so configured as to internally contact to the cap plate protrusion 1d. Such a configuration allows the cap plate protrusion 1d to secure the position of the fixing 4, so that the fixing 4 is more firmly secured against an external force, in comparison to the case where the fixing 4 is secured only by the weld spots 4c. As a result, the battery has an advantage in that the weld spots 4c of the cap plate 1 and the fixing 4 become less likely to come off.

In addition to the above-mentioned configuration, where the cap plate 1 has a cap plate protrusion 1d which protrudes upward along its rim, the fixing 4 has a raised portion 4d which protrudes upward along its rim, and the raised portion 4d is so configured as to internally contact to the cap plate protrusion 1d; in the battery of the present invention, as shown in the above-mentioned embodiment, it is preferable that the insulator 5 be fitted so as to internally contact to the raised portion 4d. Furthermore, in the battery of the present invention, separately from the above-mentioned configuration, it is preferable that the cap plate 1 have a cap plate protrusion 1d which protrudes upward along its rim, and the insulator 5 be fitted so as to internally contact to the cap plate protrusion 1d. According to these preferable configurations, the raised portion 4d or the cap plate protrusion 1d comes to fix the position of the insulator 5, so that the insulator 5 is more firmly secured against an external force, in comparison to the case where the insulator 5 is secured only by the insulation holding overhang 4b. As a result, the battery provides an advantage in that it is much less likely that an electrical joint of the terminal board 6 or other parts will be disconnected, or short circuit will occur between a portion electrically connected to a positive electrode and a portion electrically connected to a negative electrode.

In addition to the above-mentioned configuration, where the insulator 5 is fitted so as to internally contact to the raised portion 4d or the cap plate protrusion 1d; in the battery of the present invention, it is preferable that the battery case 2 form a cylindrical shape. The strength which holds the insulator 5 is sufficient in the vicinity of the insulative holding overhang 4b; however, the holding strength becomes less and less weak at an area far from the insulative holding overhang 4b. Considering a battery of a square shape to which a square-shaped insulator 5 is applied, a good distance is likely to be kept from the insulative holding overhang 4b to some of the four corners of the insulator 5. In contrast, in a battery of a cylindrical shape in which the cap plate 1 is a circular shape and no such corner is present, it is less likely that an area far from the insulative holding overhang 4b exists in the insulator 5, in comparison to the square type. Therefore, the battery case 2 of a cylindrical shape has an advantage in that the insulator 5 can be firmly secured.

In the battery of the present invention, as shown in the above-mentioned embodiment, it is preferable that the cap plate 1 be equipped with the vent valve 1b, and the insulator vent 5a be placed on the insulator 5 so as to overlap at least partly with the vent valve 1b. In this description, the insulator vent 5a refers to the vent which is so placed on the insulator 5 that the gas to be discharged during the operation of the vent valve 1b can pass. To prevent short circuit with the cap plate 1 from occurring when the area of the terminal board 6 is sufficiently large, and to allow its position to be secured by the raised portion 4d or the cap plate protrusion 1d, it is preferable that the insulator 5 be larger in size. On the other hand, to make it possible that the vent valve 1b which is placed on the cap plate 1 fully functions when operating, it is important for the discharged gas not to be blocked by the insulator 5. As for the cap plate 1, numbers of parts have to be mounted on the narrow space, including the terminal material 3b, the terminal board 6, the insulator 5, the vent valve 1b, the protection elements, and the fixing 4; therefore, with the insulator 5 being made larger in size, it is not easy to configure the discharged gas from the vent valve 1b not to be blocked by the insulator 5. However, in the event the insulator vent 5a is placed on the insulator 5 so as to overlap at least partly with the vent valve 1b, there arises an advantage in that the design satisfying the following two configurations becomes easier: making the insulator 5 larger in size, and the discharged gas from the vent valve 1b not being blocked by the insulator 5.

In addition to the above-mentioned configuration, where the cap plate 1 is equipped with the vent valve 1b, and the insulator vent 5a is placed on the insulator 5 so as to overlap at least partly with the vent valve 1b; in the battery of the present invention, it is preferable to use a configuration which satisfies the following two points: the terminal board 6 is disposed so as to overlap at least partly with the insulator vent 5a; and the terminal board 6 has a vent, or the vent 6b is formed between the terminal board 6 and the insulator 5. In the vicinity of the cap plate 1, numbers of parts have to be installed in the narrow space, including the terminal material 3b, the terminal board 6, the insulator 5, the vent valve 1b, the protection elements, and the fixing 4, and this makes the design more difficult. However, with the use of said preferable configuration, the vent valve 1b and the terminal board 6 can be disposed with an overlap, so that the configuration can be designed easier.

Furthermore, in the battery of the present invention, it is preferable that the terminal board 6 be equipped with a tab 6a which is electrically connected to the terminal material 3b, the terminal board 6 be most firmly fixed to another component at the tab 6a, and the portion where the terminal board 6 is most firmly fixed to another component be disposed so as not to overlap with the insulator vent 5a. With the use of such a preferable configuration, when the vent valve 1b operates and gas blows out at high speed, the portion of the terminal board 6 which overlaps with the insulator vent 5a is lifted by the gas pressure, the passage of the blowout gas becomes larger so that the gas can be emitted swiftly out of the battery case 2, and consequently the safety of the battery can be more fully secured. In this case, the terminal board 6 may be fixed to another component at other places than the tab 6a; however, it is preferable that the adhesive power at the fixing places other than the tab 6a be weak enough for fixation to be released when the vent valve 1b operates. As shown in the above-mentioned embodiment, it is more preferable that there is no other fixing place than the tab 6a.

In the battery of the present invention, as shown in FIG. 4, it is preferable that the insulator 5 be fixed to the cap plate 1 with a space, and said space be equipped with the protection elements. The protection elements represented in this description refer to the elements which are used in deference to safety and shut off the current when something is wrong with the battery or the charger, such as the protection circuit 14 and PTC. With the use of such a configuration, the protection elements can be protected by the insulator 5 and, as a result, are less likely to be broken by the external pressure against the battery. Moreover, such a configuration permits the protection circuit 14 to be housed in the space created between the cap plate 1 and the insulator 5, and leads to a reduction in extra space; furthermore, it becomes possible to prevent the entrance of moisture or dirt from outside, which causes adverse effects on the electrical parts, and ensure the stable operation of the protection elements.

As for the protection elements above mentioned, the protection circuit 14 has functions of detecting voltage and detecting temperature, so that in the event the voltage or temperature of the battery reaches beyond the normal level or an excessively large current passes due to short circuit, it is possible, by blocking the current, to avoid situations that leads to significant deterioration of performance or even excessive heat generation or gas formation. In addition, with this function, in the event any abnormality occurs outside the battery, the function inside the protection circuit 14 allows performance and safety of the battery to be held securely; thus, it is possible to provide the battery excellent in reliability and safety.

Moreover, the present invention is superior in long-term reliability of fixation of the insulator 5 to the cap plate 1, and this allows the insulator 5 to be held firmly against external force. As a result, in the event the protection elements are disposed in the space between the insulator 5 and the cap plate 1, there also arises an advantage in that the portion electrically connected between the protection elements and other components are less likely to be disconnected.

In the battery of the present invention, like the lithium-ion secondary batteries as shown in the above-mentioned embodiment, the non-aqueous electrolyte batteries are preferred. In the lithium-ion secondary batteries or the lithium-ion batteries where metal lithium is used as a negative electrode, containing only small amount of water in a battery can cause the battery performance to be largely degraded. Therefore, for such non-aqueous electrolyte batteries, compared to the batteries using aqueous solution as an electrolyte, the airtightness of battery cases which is highly accurate and excellent in long-term reliability becomes more important. The present invention relates to a battery where a cap plate 1 is welded to the opening of a battery case 2 and a terminal material 3b is sealed to a terminal hole 3a by an insulation sealing material 3c which contains an inorganic material, and involves such a technique as to provide the airtightness of battery cases which is highly accurate and excellent in long-term reliability; therefore when applied to non-aqueous electrolyte batteries, the invention especially achieves desirable effects.

As for the configuration of the above-mentioned embodiment, either with the protection circuit 14 or without the protection circuit 14, in the battery of the present invention, the terminal material 3b is sealed to the cap plate 1 with the insulator sealing material 3c which comprises a glass hermetic seal, as well as the rim of the cap plate 1 is fitted into the upper end opening of the battery case 2 and sealed by welding; therefore, unlike in the conventional case where a battery case is sealed by less accurate crimping with a sealing gasket 16 which will deteriorate with age, the airtightness inside the battery case 2 can be certainly ensured over a long time.

Furthermore, in the above-mentioned embodiment, the positive electrode of the element 10 which is housed in the battery case 2 is connected to the terminal board 6 through the terminal material 3b, or additionally through the protection circuit 14, and then the terminal board 6 serves as a positive terminal; therefore it is possible to make the area of the positive terminal large. Especially, according to the present invention, it is possible to have such an excellent effect that even small size batteries with a volume less than 100 cm³ are allowed to be equipped with a positive terminal having a large area. In addition, since the terminal board 6 is protected by the upper insulator 8 and only the disk-like portion of the terminal 6 is exposed through the upper insulator opening 8a, even when the rim of the upper insulator 8 experiences unexpected force, it is not easily broken. Furthermore, even when a strong force or impact is inflicted on the terminal board 6 during the wiring of the positive terminal, such a force cannot be inflicted directly on the terminal material 3b, and consequently it is unlikely that the insulator sealing material 3c is damaged and the airtightness will drop.

In the above-mentioned embodiment, in addition, a case where the vent 6b is formed in the terminal board 6 is described; however, if there is a sufficient space between the insulator vent 5a and the terminal board 6 covering over it, the vent 6b may not be necessarily formed. In addition, in the above-mentioned embodiment, a case where a large amount of gas from the inside of the battery case 2 is emitted by pushing up the terminal board 6 during the operation of the vent valve 1b is described; however, if the size of the vent 6b is sufficiently large, the terminal board 6 may be fixed to the insulator 5 or the upper insulator 8. Furthermore, since the upper insulator 8 is a component for protecting the terminal board 6, it may not be necessarily installed. In this case, it is preferable to fix or lock a part such as the locking part 6c to the insulator 5.

In the above-mentioned embodiment, in addition, a case where the vent valve 1b is made of a thin metal sheet, different from the cap plate 1, is described; however, it is possible to form a groove directly on the cap plate 1 and use it as a vent valve. In the event the vent valve 1b is made of a different metal sheet, however, the remaining thickness of the groove can be controlled with high accuracy, so that stable operation of the vent valve 1b is provided. Especially, in the embodiment where the groove of the vent valve 1b is formed on plating, it is possible to control the remaining thickness of the groove highly accurately.

Furthermore, the vent valve is not limited to a form which will open when the groove breaks, and any forms of vent valves may be used if they are configured to open following an excessively high pressure inside the battery case 2. For example, a vent valve is applicable if it is configured in such a manner that when the pressure inside the battery case 2 exceeds a predetermined value, the valve will open its opening part against the pressure or tension applied by a spring material.

In the above-mentioned embodiment, in addition, a case where the terminal board 6 serves as a positive terminal and the battery case 2 serves as a negative terminal is described; however, the positive and negative terminals can be reversed. In addition to the case where the battery case 2 itself serves as a terminal, a terminal of an electrode which is different from the terminal board 6 can be prepared separately from the battery case 2.

In the above-mentioned embodiment, in addition, the cap plate protrusion 1d is formed into a ring shape without cuts; however, it may be separated into several protrusions with cut spaces. Furthermore, with not being formed into a ring shape, the cap plate protrusion 1d may be placed at only one position, for example, having a width of approximately 5 mm. However, for the reason that the positions of the fixing 4 and the insulator 5 can be more firmly secured with the cap plate protrusion 1d, as for the cap plate protrusion 1, rather than place it at only one position and form it into a non-ring shape, it is preferable to place it at several positions and form it into a non-ring shape, and more preferable to form it into a ring shape,

In the above-mentioned embodiment, in addition, the raised portion 4d is formed into a ring shape without cuts; however, it may be separated into several raised portions with cut spaces. Furthermore, with not being formed into a ring shape, the raised portion 4d may be placed at only one position, for example, having a width of approximately 5 mm. However, for the reason that the position of the fixing 4 can be more firmly secured with the raised portion 4d when the raised portion 4d is so configured as to internally contact to the cap plate protrusion 1d, as for the raised portion 4d, rather than place it at only one position and form it into a non-ring shape, it is preferable to place it at several positions and form it into a non-ring shape, and more preferable to form it into a ring shape.

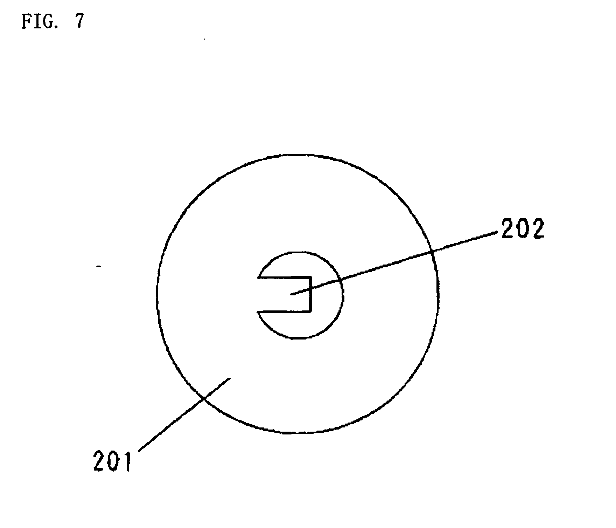

As an example of the battery of the present invention, other than the above-mentioned embodiment, there is the following approach: the claw 202 of the circle cap plate 201 which is configured for the cylindrical battery use, as shown in FIG. 7, is bent upward and passed through a slit or the insulator vent 5a which are placed on the insulator 5, then bent and folded so as to hold the insulator 5, and thus serves as an insulative holding overhang. In this case, a hole is inevitably formed at the area left after the claw 202 of the circle cap plate 201 is bent and folded, and so it is necessary to cover the hole with the vent valve 1b and the like. However, in such an approach, since a certain thickness is required for the cap plate 201 according to the mechanical strength requirements, the claw 202 serving as the insulative holding overhang also becomes thick and hard to be bent and folded.

From the above-mentioned point of view, in the battery of the present invention, it is especially preferable that the insulative holding overhang 4b is placed in the fixing 4 which is welded to the cap plate 1. With the use of such a configuration, the thickness of the insulative holding overhang 4b is easily made to be thinner than that of the cap plate 1, and this allows the insulative holding overhang 4b to be folded easier. In addition, since the cap plate 1 and the fixing 4 are fixed by welding, the fixing strength of the fixing 4 to the cap plate 1 is excellent in the long-term reliability.

Furthermore, in the event the insulative holding overhang 4b is placed on the fixing 4 which is welded to the cap plate 1, unlike in the case where a part of the cap plate 1 is bent and folded to serve as the insulative holding overhang 4b, the position of the insulative holding overhang 4b can be determined relatively freely independent of the position of the vent valve 1b, so that there is an advantage in that the greater degree of design freedom is provided in the vicinity of the cap plate 1.

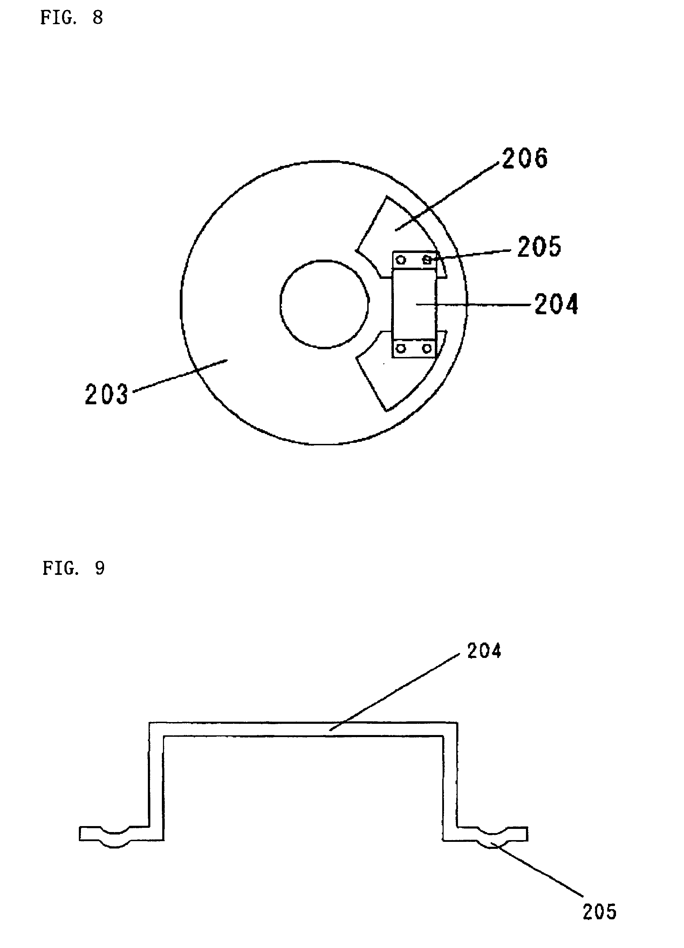

In the battery of the present invention, as another example of fixing an insulator with an insulative holding overhang, as shown in FIG. 8, there is an approach of welding either end of a metal-plate fixing 204 so as to fix an insulator 203 to the cap plate at weld spots 205. In this case, regarding the fixing 204, a portion which does not come into contact with the cap plate comes to serve as the insulative holding overhang. In FIG. 8, the insulator 203 has a hole 206; however, if the insulator 203 is not the same shape as the cap plate, without the presence of the hole 206, the same procedure can be applied for fixing the insulator. FIG. 9 illustrates a lateral view of the fixing 204 shown in FIG. 8.

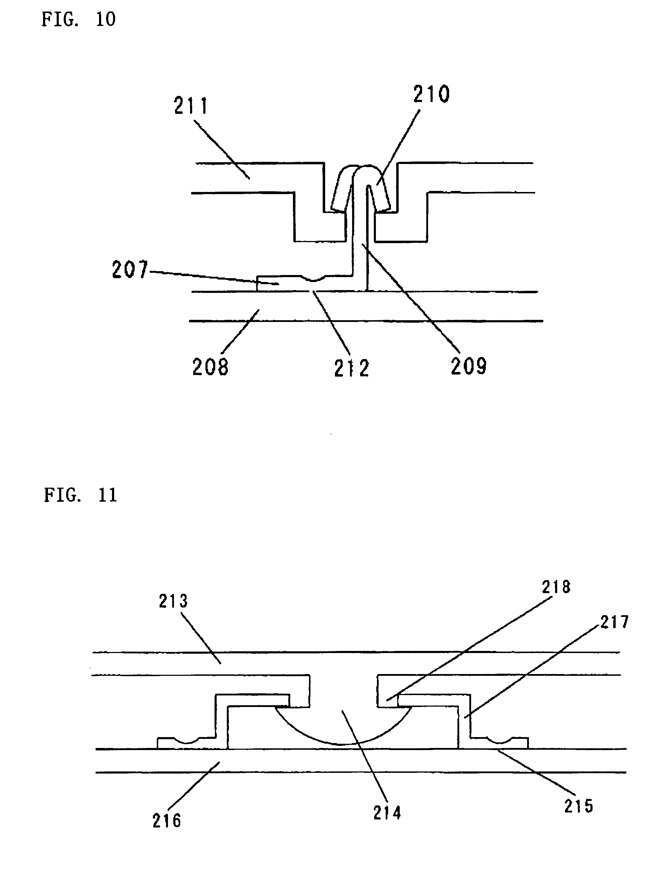

In addition, FIG. 10 shows another example of fixing an insulator with an insulative holding overhang, in the battery of the present invention. In FIG. 10, a metal plate 207 serves as a fixing, a portion 209 which is bent and protrudes upward from a cap plate 208 is an insulative holding overhang, and a cut is made in the top of the protruding portion 209. Along the cut which serves as a boundary, tip portions 210 are bent on either side and set on and fixed to an insulator 211. In this example, the tip 210 is bent on either side; however, in the present invention, the tip 210 may be bent on one side without cut. FIG. 10 illustrates an example of the metal plate 207 which is welded to a cap plate 208 at a weld spot 212.

In addition, FIG. 11 shows another example of fixing an insulator with an insulative holding overhang, in the battery of the present invention. In FIG. 11, an insulator 213 has a rivet-shaped projection 214 which projects downward. A fixing 217, which is made of a metal plate and welded to a cap plate 216 at a weld spot 215, has a round hole 218 and the projection 214 is fitted into the round hole 218, so that the insulator 213 can be secured. In this case, a portion which does not come into contact with the cap plate 216 in the fixing 217 serves as the insulative holding overhang.

Furthermore, in the above-mentioned embodiment, a cylindrical lithium-ion secondary battery is described; however, it should go without saying that as long as a battery applies an approach of sealing a battery case and a cap plate by welding, the present invention can be used in thionyl chloride batteries, thermal batteries, nickel hydride batteries, nickel cadmium batteries, lead acid batteries, lithium primary batteries, silver batteries, dry batteries, or batteries of a square or flat shape.

The present invention is different from the prior art in which an insulator is fixed only with an adhesive agent or adhesive tape, in that an insulator is held by an insulative holding overhang which is placed on a cap plate and protrudes to the upward direction of the cap plate. In the approach of using such an insulative holding overhang to fix an insulator, the insulator can be held without depending on an adhesive agent or adhesive tape, which is inferior in fixing strength in terms of long-term reliability, so that the fixing strength hardly becomes weaker even after a considerable period of time has elapsed.

Therefore, the battery of the present invention becomes excellent in long-term reliability of fixation of an insulator to a cap plate, and consequently provides following advantages: it is less likely that an electrical joint of a terminal board or parts will be disconnected, or short circuit will occur between a portion electrically connected to a positive electrode and a portion electrically connected to a negative electrode.

Furthermore, in the battery of the present invention, since a cap plate is welded to the opening of a battery case and a terminal material is sealed to a terminal hole with an insulation sealing material containing an inorganic material, the airtightness of the battery case is more fully guaranteed even at the time of battery manufacturing and can be more certainly ensured over a long time, than batteries in which a battery case is sealed with a resinous sealing gasket.

## Claims

1. A battery comprising
a cap plate which is welded to the opening of a battery case,
an insulative holding overhang which is placed on said cap plate and protrudes to the upward direction of said cap plate,
a terminal hole which is placed on said cap plate,
a terminal material which is sealed to said terminal hole with an insulation sealing material containing an inorganic material,
an insulator which is held by said insulative holding overhang and disposed on the upside of said cap plate, and
a terminal board which is supported by said insulator and electrically connected to said terminal material.

2. The battery according to claim 1,
wherein said insulative holding overhang is placed on a fixing which is welded to said cap plate.

3. The battery according to claim 2,
wherein said fixing is a ring shape.

4. The battery according to claim 2,
wherein said cap plate has said cap plate protrusion which protrudes upward along its rim,
said fixing has a raised portion which protrudes upward along its rim, and
said raised portion is so configured as to internally contact to said cap plate protrusion.

5. The battery according to claim 1,
wherein said cap plate has a cap plate protrusion which protrudes upward along its rim, and
said insulator is placed so as to internally contact to said cap plate protrusion.

6. The battery according to claim 5,
wherein said insulator is placed so as to internally contact to said raised portion.

7. The battery according to claim 5,
wherein said battery case is a cylindrical shape.

8. The battery according to claim 6,
wherein said battery case is a cylindrical shape.

9. The battery according to claim 1,
wherein said cap plate comprises a vent valve, and
an insulator vent is placed on said insulator so as to overlap at least partly with said vent valve.

10. The battery according to claim 9,
wherein said terminal board is disposed so as to overlap at least partly with said insulator vent, and
said terminal board has a vent, or a vent is formed between said terminal board and said insulator.

11. The battery according to claim 10,
wherein said terminal board is equipped with a tab which is electrically connected to said terminal material,
said terminal board is most firmly fixed to another component at said tab, and
a portion where said terminal board is most firmly fixed to another component is disposed so as not to overlap with said insulator vent.

12. The battery according to claim 1,
wherein said insulator is fixed to said cap plate with a space, and
said space comprises a protection element.

13. The battery according to claim 1,
wherein said battery is a non-aqueous electrolyte battery.
